# EUROPEAN PATENT APPLICATION

(11) **EP 4 316 641 A1**
(43) Date of publication of application: **07.02.2024**
(21) Application number: 22774987.6
(22) Date of filing: 03.03.2022
(51) Int. Cl.: B01J 8/06, B01J 4/00, C07B 61/00, C07K 1/02, C12M 1/00, C12N 15/10

(54) **CHEMICAL SYNTHESIS DEVICE**

(30) Priority: 24.03.2021 JP 2021049636; 29.03.2021 JP 2021054589; 31.05.2021 JP 2021091312
(71) Applicant: Toray Engineering Co., Ltd., Tokyo 103-0028 (JP)
(72) Inventor: YAMAMOTO, Kiyohito, Otsu-shi, Shiga 520-0842 (JP); INAKA, Chisa, Otsu-shi, Shiga 520-0842 (JP); TSUDA, Yuichiro, Otsu-shi, Shiga 520-0842 (JP)
(74) Representative: Global IP Europe Patentanwaltskanzlei
(86) International application number: PCT/JP2022/009148
(87) International publication number: WO 2022/202191

(57) **Abstract**

It is an object of the present invention to provide a chemical solution synthesis device that feeds a chemical solution free of contact with the atmosphere, wherein the efficiency of synthesizing carriers and a chemical solution in a reaction vessel can be improved. More specifically, this chemical solution synthesis device comprises a chemical solution holding unit holding a chemical solution, and a reaction vessel in which the chemical solution and carriers are reacted, in which the chemical solution is transferred from the chemical solution holding unit to the reaction vessel without coming into contact with the atmosphere, wherein the chemical solution synthesis device has a first chemical solution feed unit that is connected to the reaction vessel and supplies a chemical solution to the reaction vessel, and a chemical solution feed and discharge unit that is provided vertically above the first chemical solution feed unit, and there is provided a second chemical solution feed unit that knocks off any carriers adhering to the inner wall of the reaction vessel after the chemical solution has been discharged from the chemical solution feed and discharge unit.

## Description

### [TECHNICAL FIELD]

The present invention relates to a chemical solution synthesis device for synthesizing a chemical solution to be fed without coming into contact with the atmosphere, and more particularly to a chemical solution synthesis device with which there is less decrease in synthesis efficiency.

### [BACKGROUND ART]

With a chemical solution synthesis device used to chemically synthesize proteins, peptides, polymers, nucleic acids, etc., chemical synthesis is performed by supplying a plurality of chemical solutions (reagents) to a reaction vessel. For example, when a nucleic acid is to be synthesized, a large number of carriers (porous beads) are provided in the reaction vessel, and while chemical solutions are sequentially supplied to the reaction vessel, detritylation, coupling, oxidation, capping, or other such treatments are repeatedly performed to progressively bind bases to the beads.

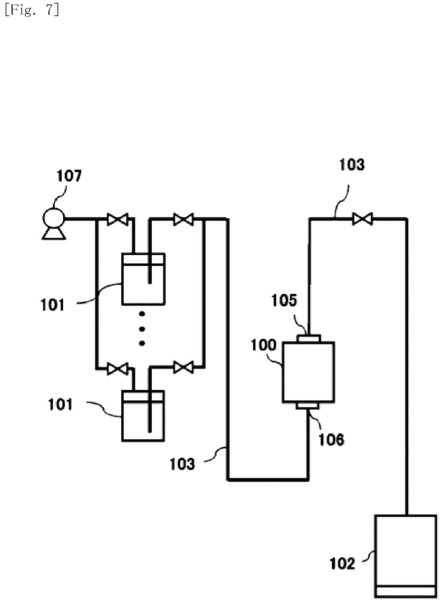

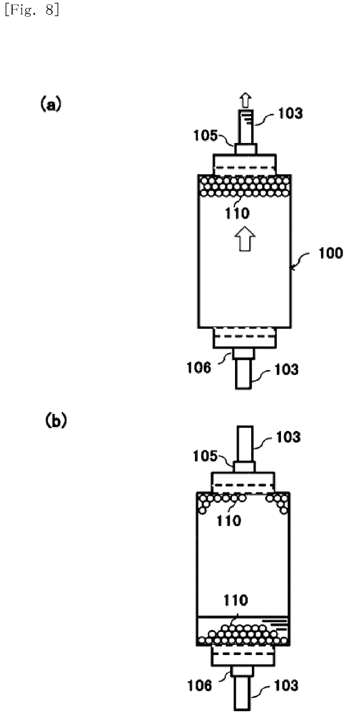

A typical chemical solution synthesis device, as shown in Fig. 7, for example, comprises a reaction vessel 100 that contains carriers 110 (see Fig. 8) and to which a chemical solution is supplied, a chemical holding unit such as a chemical solution tank 101 for storing the chemical solution to be supplied to this reaction vessel 100, and a discharge tank 102 for storing waste liquid discharged from the reaction vessel 100. These are connected by a pipe 103, and the chemical solution is fed by the pressure from a pressure supply source 107, so that the chemical solution and the carriers 110 can be synthesized and reacted without the chemical solution coming into contact with the atmosphere (see Patent Literature 1 below, for example). More specifically, the reaction vessel 100 has a chemical solution supply unit 106 to the vertically lower end of which the chemical is supplied, and a chemical solution feed and discharge unit 105 to the vertically upper end of which the chemical is discharged. When a chemical solution is supplied from the selected chemical solution tan, through the pipe 103, and from the chemical solution supply unit 106 at the lower end, the chemical solution and the carriers undergo a synthesis reaction in the reaction vessel 100, after which the reacted chemical solution is discharged from the chemical solution feed and discharge unit 105 at the upper end, through the pipe 103, and to the discharge tank 102 (see Fig. 8(a)).

Here, as discussed above, the chemical solution is supplied to the reaction vessel 100 from the chemical solution supply unit 106 at the lower end in the vertical direction. That is, the chemical solution from the chemical solution supply unit 106 at the lower end portion is stored while spreading out in the radial direction of the reaction vessel 2 under the influence of gravity. Therefore, the chemical solution can be distributed throughout the reaction vessel 2, synthesis efficiency with the carriers 110 can be improved over that when the chemical solution is supplied from the upper end side, and the carriers 110 and the chemical solution in the reaction vessel 2 can be chemically synthesized without waste.

### [PRIOR ART DOCUMENT]

### [PATENT LITERATURE]

[Patent Literature 1] Japanese Patent Application Publication No. 2020-093236

### [SUMMARY OF THE INVENTION]

### [PROBLEMS TO BE SOLVED BY THE INVENTION]

However, with the chemical solution synthesis device described above, there was the risk that the synthesis efficiency in the reaction vessel 100 would decrease. That is, after the chemical solution is stored in the reaction vessel 100 and subjected to a synthesis reaction, when the chemical solution is discharged from the chemical solution feed and discharge unit 105 at the upper end as shown in Fig. 8(a), some of the carriers 110 may adhere at the upper part of the reaction vessel 100 as shown in Fig. 8(b). When a small amount of chemical solution is to be stored and reacted in the reaction vessel 100 in this state, if the chemical solution is supplied from the chemical solution supply unit 106, the chemical solution will not reach the adhered carriers 110, so the reaction cannot be carried out sufficiently.

Also, some of the carriers immediately after the chemical solution has been supplied may float on the surface of the chemical solution in the reaction vessel 100, and shaking of the liquid surface during the chemical solution supply may cause these to adhere to the wall surface of the reaction vessel 100. Here again, the problem is the same as what was described above, which is that the reaction cannot be carried out sufficiently in a state in which the chemical solution after the completion of supply does not reach the height position where the carriers have adhered.

To solve this problem, the chemical solution may be supplied and stored through the first port 105, but if an attempt is made to supply the chemical solution from the first port 105 and store the chemical solution in the reaction vessel 100, there will be no way for the air in the reaction vessel 100 to escape, making it extremely difficult to fill the entire reaction vessel 100 with the chemical solution. Accordingly, a problem was that the specified amount of chemical solution could not be reacted with the carriers 110, and the synthesis efficiency suffered as a result.

The present invention was conceived of in light of the above problem, and it is an object of the present invention to provide a chemical solution synthesis device that feeds a chemical solution free of contact with the atmosphere, wherein the synthesis efficiency of the carriers and the chemical solution in the reaction vessel can be improved.

### [MEANS TO SOLVE THE PROBLEMS]

In order to solve the above-mentioned problem, the chemical solution synthesis device of the first invention comprises a chemical solution holding unit holding a chemical solution, and a reaction vessel the chemical solution and carriers are reacted, in which the chemical solution is transferred from the chemical solution holding unit to the reaction vessel without coming into contact with the atmosphere, wherein the chemical solution synthesis device has a first chemical solution feed unit that is connected to the reaction vessel and supplies a chemical solution to the reaction vessel, and a chemical solution feed and discharge unit that is provided vertically above the first chemical solution feed unit, and there is provided a second chemical solution feed unit that suppresses adhesion of the carriers to the reaction vessel.

With this chemical solution synthesis device, because the second chemical solution feed unit is provided, the carriers are less likely to adhere to the inner wall of the reaction vessel. That is, even if the carriers try to adhere to the inner wall of the reaction vessel when the liquid surface of the chemical solution is shaken, the carriers will be less likely to adhere because they are supplied from the second chemical solution feed unit provided above the liquid surface of the chemical solution, and even if some should adhere to the inner wall of the reaction vessel, they can be flushed back toward the chemical solution. Therefore, the carriers are more likely to come into contact with the chemical solution supplied from the first chemical solution feed unit on the lower end side, and the synthesis efficiency of the carriers and the chemical solution can be improved.

Also, in order to solve the above-mentioned problem, the chemical solution synthesis device of the present invention comprises a chemical solution holding unit holding a chemical solution, and a reaction vessel in which the chemical solution and carriers are reacted, in which the chemical solution is transferred from the chemical solution holding unit to the reaction vessel without coming into contact with the atmosphere, wherein the chemical solution synthesis device has a first chemical solution feed unit that is connected to the reaction vessel and supplies a chemical solution to the reaction vessel, and a chemical solution feed and discharge unit that is provided vertically above the first chemical solution feed unit, and there is provided a second chemical solution feed unit that knocks off any carriers adhering to the inner wall of the reaction vessel after the chemical solution has been discharged from the chemical solution feed and discharge unit.

With this chemical solution synthesis device, since the second chemical solution feed unit is provided, after the chemical solution has been discharged from the chemical solution feed and discharge unit on the upper side in the vertical direction, any carriers adhering to the inner wall of the reaction vessel can be knocked off. That is, when the chemical solution supplied from the second chemical solution feed unit makes contact with carriers adhering to the inner wall of the reaction vessel, the carriers drop together with the chemical solution that is supplied, allowing the carriers to be returned to the lower end of the reaction vessel. Therefore, the carriers are more likely to come into contact with the chemical solution supplied from the first chemical solution feed unit on the lower end side, and the synthesis efficiency of the carriers and the chemical solution can be improved.

Also, the configuration may be such that the second chemical solution feed unit is connected to the chemical solution feed and discharge unit, and the chemical solution is supplied by reversing the flow in the chemical solution feed and discharge unit.

With this configuration, since the chemical solution can be supplied using the chemical solution feed and discharge unit, there is no need to form an independent port dedicated to the second chemical solution feed unit in the reaction vessel. Consequently, the second chemical solution feed unit can be provided without complicating the piping more than necessary.

Also, the configuration may be such that the chemical solution supplied from the second chemical solution feed unit is supplied along the side wall of the reaction vessel.

With this configuration, any carriers that try to adhere to the side wall of the reaction vessel, or carriers that have adhered, can be flushed back, making it less likely that carriers will adhere to the side wall of the reaction vessel and diminish the synthesis efficiency.

Also, the configuration may be such that the chemical in the reaction vessel is discharged by reversing the flow in the first chemical solution feed unit.

With this configuration, since the first chemical solution feed unit is positioned vertically lower than the chemical solution feed and discharge unit, carriers will be less likely to adhere to the wall surface of the reaction vessel than when the chemical solution is discharged from the chemical solution feed and discharge unit.

Also, the configuration may be such that the reaction vessel is provided with an exhaust unit for discharging gas in the reaction vessel.

With this configuration, providing the discharge unit allows any gas in the reaction vessel to be discharged, so the chemical solution can be more easily supplied from the second chemical solution feed unit.

Also, the configuration may be such that the reaction vessel is provided with a guide member that guides the chemical solution supplied through the second chemical solution feed unit to the side wall of the reaction vessel.

With this configuration, the chemical solution fed from the second chemical solution feed unit is guided to the side wall of the reaction vessel by the guide member, so the guided chemical solution flows more readily along the side wall. Consequently, any carriers adhering to the side wall can be efficiently knocked off and will drop together with the chemical solution.

As a specific mode of this guide member, the configuration can be simplified by having the guide member also serve as the filter.

Also, the above-mentioned chemical solution may be a cleaning solution, and the same effect can be obtained when a cleaning solution is used instead of a chemical solution.

In order to solve the above-mentioned problem, the chemical solution synthesis device of the second invention is a chemical solution synthesis device comprising a chemical solution holding unit holding a chemical solution, and a reaction vessel in which the chemical solution and carriers are reacted, in which the chemical solution is transferred from the chemical solution holding unit to the reaction vessel without coming into contact with the atmosphere, wherein the chemical solution synthesis device has a chemical solution feed and discharge unit that is connected to the reaction vessel and supplies a chemical solution, and a first chemical solution feed unit, and the chemical solution synthesis device further comprises a discharge unit that discharges fluid in the reaction vessel.

With the chemical solution synthesis device described above, since the reaction vessel is provided with a discharge unit, any fluid including air or a chemical solution in the reaction vessel can be discharged through the discharge unit. That is, in supplying the chemical solution from the chemical solution feed and discharge unit in order to store the chemical solution in the reaction vessel, fluid in the reaction vessel can be discharged through the discharge unit by opening the discharge unit even though the chemical solution feed and discharge unit is disposed at the upper part. Consequently, the chemical solution can be supplied smoothly, and the chemical solution can be stored in the reaction vessel, even when the chemical solution feed and discharge unit is disposed at the upper part. Also, since the chemical solution can be smoothly supplied from the chemical solution feed and discharge unit at the upper part, any carriers adhering inside the reaction vessel can be knocked off by the flow of the chemical solution, and the chemical solution and the carriers can be sufficiently reacted. Therefore, providing a discharge unit separately from the chemical solution feed and discharge unit makes it possible to easily supply the chemical solution to the reaction vessel without exposing the chemical solution to the atmosphere, thereby improving the reaction efficiency of the chemical solution.

Also, the configuration may be such that the first chemical solution feed unit is disposed vertically below the chemical solution feed and discharge unit, and the discharge unit is disposed at a height equal to or greater than the height of the chemical solution feed and discharge unit.

With this configuration, since the discharge unit is disposed at the highest position, fluid in the reaction vessel can be discharged from the discharge unit without the chemical solution fed from the chemical solution feed and discharge unit being directly discharged from the discharge unit.

Also, the configuration may be such that it is possible to switch between a forward supply state in which the chemical solution is supplied from the first chemical solution feed unit to the reaction vessel, and a reverse supply state in which the chemical solution is supplied from the chemical solution feed and discharge unit to the reaction vessel, and the reverse supply state includes an open state of the discharge unit in which fluid in the reaction vessel is discharged.

With this configuration, both the chemical solution feed and discharge unit and the first chemical solution feed unit can supply the chemical solution to the reaction vessel and discharge the chemical solution from the reaction vessel. Furthermore, in the reverse supply state, the discharge unit is in an open state, so the chemical solution supplied from the chemical solution feed and discharge unit can be stored in the reaction vessel.

Also, the configuration may be such that the chemical solution feed and discharge unit and the first chemical solution feed unit can be switched between a feed state in which the chemical solution is fed, and a feed stopped state in which the chemical solution feed is stopped, and in the reverse supply state, the chemical solution is supplied to the reaction vessel by alternately switching between a chemical solution supply state in which the chemical solution is supplied while the discharge unit is closed and the chemical solution feed and discharge unit is in a feed state, and a vessel discharge state in which fluid in the reaction vessel is discharged while the discharge unit is open and the chemical solution feed and discharge unit is in a feed stopped state.

With this configuration, in the chemical solution supply state, the discharge unit is closed, so it is less likely that the chemical solution fed through the chemical solution feed and discharge unit will be directly discharged from the discharge unit before being held in the reaction vessel. In this chemical solution supply state, the pressure in the reaction vessel gradually rises, so once the pressure reaches a certain level, fluid (air) is discharged from the discharge unit in the vessel discharge state to restore the pressure. This procedure can be repeated to reliably supply the chemical solution from the chemical solution feed and discharge unit to the reaction vessel without discharging the chemical solution from the discharge unit.

Also, the configuration may be such that there is a sensor for sensing whether or not the feed from the chemical solution feed and discharge unit is complete, wherein a residual feed operation in which residual chemical solution that has not yet been fed is performed after the sensing operation by the sensor.

With this configuration, since the residual feed operation of feeding any residual chemical solution is performed after the sensor has reacted, there is greater latitude in the attachment position of the sensor, and the weighed-out chemical solution can be reliably fed to the reaction vessel.

Also, a specific mode of the residual feed operation may be a configuration in which the chemical solution supply state and the vessel discharge state are alternately repeated.

Also, the configuration may be such that a holding vessel capable of holding a fluid is provided downstream of the reaction vessel, and the discharge unit is connected to the holding vessel, and the fluid discharged from the discharge unit is discharged to the holding vessel without coming into contact with the atmosphere.

With this configuration, since the holding vessel is provided on the downstream side of the discharge unit, any gas in the reaction vessel is less likely to leak to the outside than when the discharge unit is an air release valve, and the outside atmosphere can be prevented from flowing into the reaction vessel through the air release valve. Also, controlling the pressure of the storage vessel to be lower than that of the reaction vessel allows the discharge amount from the discharge unit to be controlled by means of differential pressure. That is, the state of discharge from the discharge unit can be controlled better than when the discharge unit is an air release valve.

Also, the configuration may be such that the reaction vessel is equipped with a filter that suppresses the discharge of the carriers.

With this configuration, the carriers can be retained in the reaction vessel even though the chemical solution is discharged from any one of the chemical solution feed and discharge unit, the first chemical solution feed unit, and the discharge unit.

Also, the configuration may be such that the reaction vessel is provided with a guide member that guides the chemical solution fed from the chemical solution feed and discharge unit to the side wall of the reaction vessel.

With this configuration, the chemical solution fed from the chemical solution feed and discharge unit is guided to the side wall of the reaction vessel by the guide member, and the guided chemical solution flows along the side wall. This allows any carriers adhering to the side wall to be knocked off.

As a specific mode of the guide member, the configuration can be simplified by having the guide member also serve as the filter.

Also, the configuration may be such that the chemical solution feed and discharge unit is formed to be in contact with the filter.

With this configuration, since the pressure of the chemical solution fed from the chemical solution feed and discharge unit acts on the filter, the chemical solution can be pressure-fed to the reaction vessel without being discharged from the discharge unit.

Also, the configuration may be such that the discharge unit is equipped with a filter that suppresses the discharge of the carriers.

With this configuration, the carriers in the reaction vessel will be less likely to be discharged through the discharge unit. That is, this avoids the problem of the carriers being discharged from the discharge unit in the event that a fluid (air) is discharged from the discharge unit while the entire reaction vessel is being filled with the chemical solution.

### [EFECTS OF THE INVENTION]

With the chemical solution synthesis device of the present invention, in a chemical solution synthesis device that feeds a chemical solution without coming into contact with the atmosphere, the efficiency of synthesizing the carriers and the chemical solution in the reaction vessel can be improved.

### [BRIEF DESCRIPTION OF THE DRAWINGS]

Fig. 1 is a schematic pipe routing diagram of a chemical solution synthesis device of the present invention;
Fig. 2 is a diagram of the reaction vessel of the chemical solution synthesis device;
Fig. 3 is a pipe routing diagram showing a normal mode (forward supply state) in which a chemical solution is supplied from a first chemical solution feed unit to the reaction vessel;
Fig. 4 includes diagrams of the state in which a chemical solution is discharged from a reaction vessel, with (a) being a diagram of the state in which carriers have moved upward while a chemical solution is being discharged from a chemical solution feed and discharge unit, and (b) a diagram of the state in which the carriers have adhered to the upper portion after the chemical solution has been discharged from the chemical solution feed and discharge unit;
Fig. 5 is a pipe routing diagram of a carrier return mode (reverse supply state) in which the chemical solution is supplied to the reaction vessel by reversing the flow of the chemical solution feed and discharge unit from the second chemical solution feed unit;
Fig. 6 is a diagram of the state in which another guide member is provided to the reaction vessel;
Fig. 7 is a schematic pipe routing diagram of a conventional chemical solution synthesis device;
Fig. 8 includes diagrams of the state in which a chemical solution is discharged from a conventional reaction vessel, with (a) being a diagram of the state in which carriers have moved upward while a chemical solution is being discharged from a chemical solution feed and discharge unit at the upper end, and (b) a diagram of the state in which carriers have adhered to the upper part after the chemical solution has been discharged from the chemical solution feed and discharge unit;
Fig. 9 is a diagram of the state in which a carriers floating in a reaction vessel sink in the chemical solution when more of the chemical solution is supplied; and
Fig. 10 includes of diagrams of a configuration in which the supplied chemical solution is conveyed to the side wall of the reaction vessel, with (a) being a diagram of the state in which the pipe is housed within the wall surface of the lid, and (b) a diagram of the state in which the pipe protrudes from the wall surface of the lid.

### [EMBODIMENTS TO CARRY OUT THE INVENTION]

An embodiment of the chemical solution synthesis device of the present invention will be described with reference to the drawings.

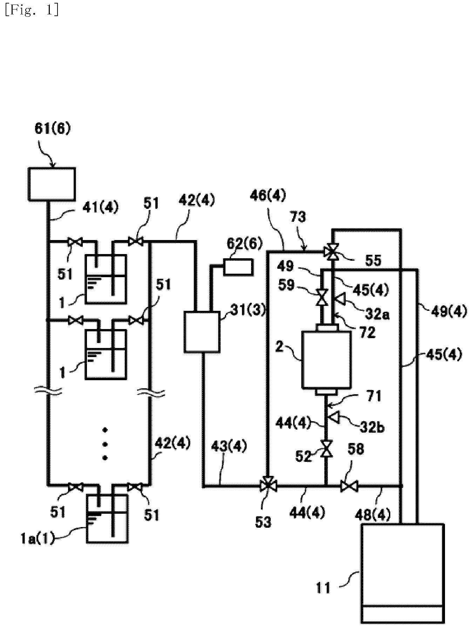

Fig. 1 is a pipe routing diagram showing the chemical solution synthesis device in an embodiment of the present invention. This embodiment describes an example in which a chemical solution (reagent) is used as a fluid, but the present invention is not limited to chemical solutions, and can also be applied when a liquid other than a chemical solution is subjected to chemical synthesis, mixing, etc.

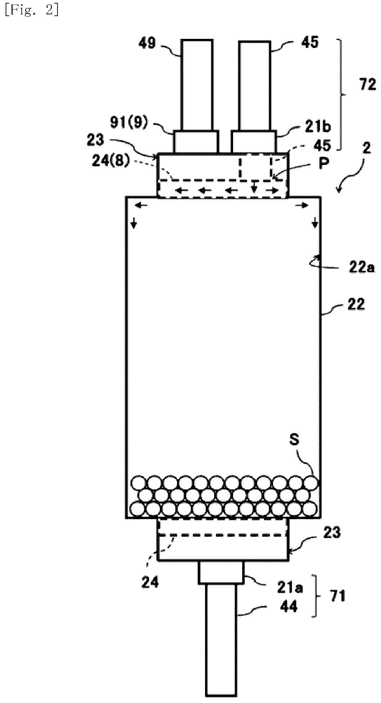

As shown in Fig. 1, the chemical solution synthesis device comprises chemical solution tanks 1, which are each a chemical holding unit in which a chemical solution is stored; a metering unit 3 which meters out the chemical; a reaction vessel 2 that holds carriers S (porous beads; see Fig. 2); and a discharge tank 11, which is a holding vessel that holds the waste liquid discharged from the reaction vessel 2. These components are connected by pipes 4. After the chemical solution supplied from a chemical solution tank 1 is metered by the metering unit 3, the chemical solution is supplied to the reaction vessel 2, and is brought into contact with the carriers S in the reaction vessel 2 to perform chemical synthesis. The chemical solution that has undergone chemical synthesis is then fed to the discharge tank 11 and discharged. For example, when synthesizing a nucleic acid, a certain amount of the porous carriers S are put into the reaction vessel 2, and while a metered chemical solution is progressively supplied to the reaction vessel 2, treatments such as detritylation, coupling, oxidation, and capping are repeatedly performed to sequentially bind bases to the beads.

The chemical solution tanks 1 are each used to hold a reagent used in the chemical synthesis. Three chemical solution tanks 1 are shown in the example of Fig. 1, but in actual practice a large number of chemical solution tanks 1 are provided, with each of these chemical solution tanks 1 being coupled to the metering unit 3 by a pipe 42. That is, the chemical solution held in each chemical solution tank 1 is fed to the metering unit 3 without being mixed with the other chemical solutions.

A pressure adjusting means 6 is connected to the chemical solution tanks 1, and the chemical solution in the chemical solution tank 1 is pumped by this pressure adjusting means 6. The pressure adjusting means 6 has a gas tank 61 filled with gas, and a pipe 41 linking the gas tank 61 and the chemical solution tank 1, and the gas in the gas tank 61 can be supplied to the chemical solution tanks 1 through the pipe 41. That is, when the gas from the gas tank 61 is supplied, the pressure of the chemical solution tank 1 is adjusted to the pressure of the gas tank 61, forming a differential pressure with the pressure in the metering unit 3, which causes the chemical solution in the chemical solution tank 1 to be fed to the metering unit 3. Adjusting the pressure of the gas tank 61 allows the flow rate of the chemical solution fed from the chemical solution tank 1 to be adjusted. That is, if the pressure difference between the pressure of the chemical solution tank 1 and the metering unit 3 is increased, the chemical solution can be fed from the chemical solution tank 1 faster and the amount of the chemical solution can be increased, and if the pressure difference between the pressure of the chemical solution tank 1 and the metering unit 3 is decreased, the chemical solution can be fed from the chemical solution tank 1 more slowly and the amount of the chemical solution can be decreased.

Also, in this embodiment, one of the chemical solution tanks 1 holds a cleaning solution. This cleaning solution is used to clean the reaction vessel 2 and the pipe 4 by flushing out the cleaning solution after a first chemical solution is fed and before the next chemical solution is fed when the specific chemical solution is fed and that chemical solution cannot be mixed with the previously fed chemical solution. This cleaning solution is also held in a chemical solution tank 1 (the chemical solution tank 1a in Fig. 1) having the same configuration as described above, and the cleaning solution is also fed by the same configuration as that of the chemical solution described above.

A valve 51 is provided to each of the pipes 41 and 42. These valves 51 selectively connect a target chemical solution tank 1 to the metering unit 3. That is, in a state in which the valve 51 of the chemical solution tank 1 selected for supply has been opened (open state), gas is supplied from the gas tank 61 to pressurize the chemical solution tank 1, and the pressure in the chemical solution tank 1 is controlled to be higher than the pressure in the metering unit 3, so the chemical solution in the selected chemical solution tank 1 is fed to the metering unit 3 through the pipe 42. The pipes 41, 42, etc., shall be collectively referred to as the pipes 4 when there is no particular need to distinguish between them.

Also, in this embodiment, an example is described in which the gas tank 61 is used as the pressure adjusting means 6, but a gas supply source installed in the building where the chemical solution synthesis device is installed may be used instead of the gas tank 61. The gas in this gas tank 61 is one that will not react with the chemical solution in the chemical solution tank 1 (such as argon gas).

Also, the metering unit 3 meters the supplied chemical solution very accurately. In this embodiment, the supplied chemical solution is weighed, and the amount of chemical solution that reacts with the carriers S in the reaction vessel 2 can be accurately metered. That is, the metering unit 3 has a metering vessel 31 and a load cell (not shown) that is connected to the metering vessel 31, and the chemical solution held in the metering vessel 31 is weighed by the load cell.

The pipe 42 is connected to the upper end of the metering vessel 31, the pipe 43 is connected to the lower end of the metering vessel 31, the chemical solution fed from the chemical solution tank 1 is supplied through the pipe 42, and the metered chemical solution is discharged through the pipe 43. More specifically, when the valve 51 of the pipe 4 connecting the selected chemical solution tank 1 and the metering vessel 31 is open, the selected chemical solution tank 1 is pressurized by the gas tank 61, causing the chemical solution to be supplied to the metering vessel 31 through the pipe 42. Then, in the reaction vessel 2, the supply of the solution is halted as soon as the amount of the chemical solution required for one synthesis reaction is metered out, resulting in a state in which the metering vessel 31 holds the chemical solution required for the synthesis reaction. The metered chemical solution is fed from the metering vessel 31 to the reaction vessel 2 through the pipe 43.

The feed from the metering unit 3 is performed by a gas tank 62 (pressure adjusting means 6). Specifically, the gas tank 62 is connected to the metering vessel 31 separately from the gas tank 61 so that gas can be supplied from the gas tank 62 to the metering vessel 31. When gas is supplied from the gas tank 62 to the metering vessel 31, the pressure in the metering vessel 31 is adjusted, and the differential pressure between the metering unit 3 and the reaction vessel 2 is adjusted, so that the chemical solution in the metering vessel 31 is fed to the reaction vessel 2. In the example in Fig. 1, the metered chemical solution is supplied to the reaction vessel 2 through the pipes 43 and 44 (or the pipe 45 via the pipe 46). This gas tank 62 may also use a gas supply source that is installed in the building.

Also, the reaction vessel 2 provides a reaction field for chemical synthesis by bringing the carriers S contained in the reaction vessel 2 into contact with the supplied chemical solution or the like. In this embodiment, the reaction vessel 2 is a glass cylindrical tube extending in one direction, and the carriers S are held in the reaction vessel 2 (see Fig. 2). Also, the ends in the vertical direction of the reaction vessel 2 are connected to a first chemical solution feed unit 71 (the "second chemical solution feed unit 72" in prior application 2021-049636 and the "first chemical solution supply unit 71" in prior application 2021-091312) to which the chemical solution is supplied (fed), and a chemical solution feed and discharge unit 72 (the "first chemical solution feed unit 71" in prior application 2021-049636 and the "chemical solution discharge unit 72" in prior application 2021-091312). That is, the reaction vessel 2 is basically configured such that the chemical solution is supplied through the first chemical solution feed unit 71, and is discharged through the chemical solution feed and discharge unit 72. In this embodiment, the chemical solution feed and discharge unit 72 is provided on the upper side in the vertical direction, and the first chemical solution feed unit 71 is provided on the lower side in the vertical direction.

The first chemical solution feed unit 71 supplies or discharges the chemical solution on the vertically lower side of the reaction vessel 2, and in this embodiment is formed by a first port 21a (the "second port 21b" in prior application 2021-049636) and a pipe 44. That is, as shown in Fig. 2, the reaction vessel 2 has the first port 21a on the lower side in the vertical direction, and the pipe 44 is connected to the first port 21a. Therefore, the chemical solution fed from the metering unit 3 through the pipe 43 is supplied to the reaction vessel 2 through a three-way valve 53 and the pipe 44. Then, when the chemical solution is supplied from the first chemical solution feed unit 71, the supplied chemical solution spreads out in the radial direction of the reaction vessel 2 under the influence of gravity and is stored. Accordingly, the chemical solution can be distributed throughout the reaction vessel 2, and the chemical solution can be chemically synthesized with the carriers S held in the reaction vessel 2 without waste.

The chemical solution feed and discharge unit 72 discharges or supplies the chemical solution on the upper side in the vertical direction of the reaction vessel 2, and in this embodiment is formed by a second port 21b (the "first port 21a" in prior application 2021-049636) and a pipe 45. That is, as shown in Fig. 2, the reaction vessel 2 has the second port 21b on the upper side in the vertical direction, and the pipe 45 is connected to the second port 21b. Therefore, the chemical solution fed from the metering unit 3 through the pipe 43 is supplied to the reaction vessel 2 through the three-way valve 53, the pipe 46, the three-way valve 55, and the pipe 45.

Thus, a chemical solution can be supplied to the reaction vessel 2 from both the chemical solution feed and discharge unit 72 and the first chemical solution feed unit 71. In particular, when the chemical solution is supplied from the first chemical solution feed unit 71, the supplied chemical solution is stored while spreading out in the radial direction of the reaction vessel 2 under the influence of gravity. Accordingly, the chemical solution can be distributed throughout the reaction vessel 2, and the chemical solution can be chemically synthesized with the carriers S in the reaction vessel 2 without waste. A mode in which a chemical solution is supplied from the first chemical solution feed unit 71 to the reaction vessel 2 is called the forward supply state, and a chemical solution is normally supplied to the reaction vessel 2 in the forward supply state. On the other hand, in contrast to this forward supply state, a mode in which a chemical solution is supplied from the chemical solution feed and discharge unit 72 to the reaction vessel 2 is called the reverse supply state. The forward supply state and the reverse supply state can be set by switching whether a valve is open or closed, and the supply state can be selected according to the appropriate reaction mode for each chemical solution.

The discharge tank 11 (discussed below) is provided on the downstream side of the reaction vessel 2, and the reaction vessel 2 and the discharge tank 11 are connected by the pipe 45. That is, the chemical solution in the reaction vessel 2 can be discharged from the chemical solution feed and discharge unit 72 through the pipe 45. Also, the pipe 44 is connected to the pipe 45 by a valve 58 via a pipe 48, and the reaction vessel 2 is connected to the discharge tank 11 via the pipe 44, the pipe 48, and the pipe 45. That is, the chemical solution in the reaction vessel 2 can also be discharged via the first chemical solution feed unit 72.

Also, the discharge tank 11 is provided as a holding vessel for holding the chemical solution or the like that has been discharged from the reaction vessel 2 upon completion of the reaction, on the downstream side of the reaction vessel 2. The discharge tank 11 is formed to have a larger capacity than the reaction vessel 2, and is formed to have a capacity that is large enough even when the reaction vessel 2 is discharged a plurality of times. In this embodiment, the chemical solution after the reaction is discharged to the discharge tank 11 via the chemical solution feed and discharge unit 72 or the first chemical solution feed unit 71. That is, the reaction vessel 2 is pressurized by the gas supplied from the gas tank 62, and the chemical solution after the reaction is discharged to the discharge tank 11 through the chemical solution feed and discharge unit 72. Thus, the chemical solution synthesis device of the present invention is configured so that the chemical solution is fed from the chemical solution tank 1 to the discharge tank 11 without coming into contact with the atmosphere.

Also, the chemical solution synthesis device is provided with the second chemical solution feed unit 73 (see Fig. 1) apart from the first chemical solution feed unit 71. The second chemical solution feed unit 73 is used to make it less likely that the carriers S will adhere to the reaction vessel 2, and knock off any carriers S adhering to the reaction vessel 2. In this embodiment, the second chemical solution feed unit 73 is formed by a pipe 46 that is connected to the pipe 43 by the three-way valve 53, and is formed by connecting the pipe 46 to the pipe 45 by the three-way valve 55. The metered chemical solution is fed by the second chemical solution feed unit 73 from the pipe 43, through the three-way valve 53, and then through the pipe 46, and is then fed through the three-way valve 55 and the pipe 45 to the reaction vessel 2. That is, the chemical solution is supplied to the reaction vessel 2 by reversing the flow in the chemical solution feed and discharge unit 72 by means of the second chemical solution feed unit 73. Supplying the chemical solution from this second chemical solution feed unit 73 causes the chemical solution to flow along the side wall 22a of the reaction vessel 2, and knocks off the carriers adhering to the reaction vessel 2.

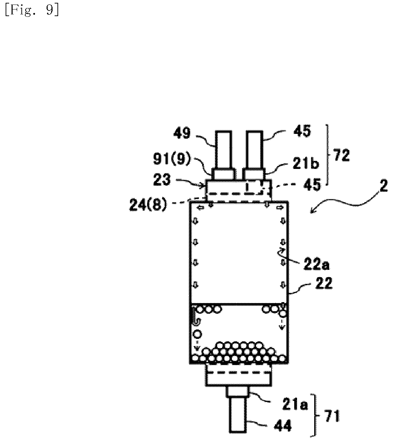

Also, when the chemical solution supplied from the second chemical solution feed unit 73 flows along the side wall 22a of the reaction vessel 2, it flushes back any carriers S that are about to adhere to the side wall 22a of the reaction vessel 2, making it less likely that the carriers S will adhere to the side wall 22a. Furthermore, as shown in Fig. 9, when the chemical solution is supplied from the second chemical solution feed unit 73, the flow of the chemical solution directly hits any carriers S floating on the liquid surface and causes those carriers to sink, again making it less likely that the carriers S will adhere to the side wall 22a of the reaction vessel 2. In particular, when the chemical flows along the side wall 22a of the reaction vessel 2, the flow of the chemical directly hits the carriers S floating on the liquid surface near the side wall 22a, so that the chemical solution has a greater affinity to the carriers S than when the chemical solution is supplied from the lower first chemical solution feed unit 71, and furthermore, the shaking of the liquid surface that accompanies the supply of the chemical solution can sink any carriers S attempting to adhere to the side wall 22a. This makes it less likely that the carriers S will adhere to the side wall 22a.

Also, the pipe 44 is connected by the valve 58 to the pipe 45 via the pipe 48, and the reaction vessel 2 is connected to the discharge tank 11 via the pipe 44, the pipe 48, and the pipe 45. In other words, the chemical solution in the reaction vessel 2 supplied from the second chemical solution feed unit 73 can be discharged by reversing the flow direction of the first chemical solution feed unit 71.

In the above description, the target was a chemical solution, but a cleaning solution can be used instead of a chemical solution, and even in this case, metering and feed are carried out with the same configuration as with a chemical solution.

As shown in Fig. 2, the reaction vessel 2 has a reaction vessel main body 22 that holds the carriers S (beads), and lids 23 that are provided at the two ends in the axial direction of the reaction vessel main body 22. These lids 23 are provided with a first port 21a and a second port 21b, and the chemical solution is supplied from the first port 21a and discharged from the second port 21b. In this embodiment, the chemical solution can be supplied to or discharged from the reaction vessel main body 22 through the first port 21a or the second port 21b.

A filter 24 is provided at the inlet/outlet of the reaction vessel main body 22 so as to block the flow path leading from the reaction vessel main body 22 and through the first port 21a and the second port 21b. Consequently, even if impurities are contained in the chemical solution supplied through the first port 21a or the second port 21b, those impurities can be removed. Also, when the reacted chemical solution is discharged from the reaction vessel 2, the filter 24 prevents the carriers S from being discharged, thereby preventing the carriers S in the reaction vessel 2 from leaking to the outside.

Moreover, the filter 24 is formed in a disk shape, and is provided so that its outer edge portion makes contact with the wall surface contiguous with the side wall 22a of the reaction vessel main body 22. That is, the reaction vessel main body 22 is formed so that the portion connected to the lid 23 protrudes, and the filter 24 is disposed so as to be touching the wall surface of this protruding portion. Consequently, the chemical solution supplied from the second port 21b flows along the side wall 22a of the reaction vessel main body 22 and is supplied into the reaction vessel main body 22. That is, when the chemical solution is supplied from the second port 21b, or in other words, when the chemical solution is supplied from the second chemical solution feed unit 73 and the chemical solution is supplied by reversing the flow of the chemical solution feed and discharge unit 72, the chemical solution penetrates into the filter 24 and moves over the entire surface of the filter 24, as indicated by the arrow in Fig. 2. If the chemical solution continues to be supplied, the filter 24 will eventually be unable to hold any more chemical solution, and because the outer edge of the filter 24 is contiguous with the side wall 22a of the reaction vessel main body 22, any chemical solution that cannot be held by the filter 24 will be pulled by surface tension with the side wall 22a and flow along the side wall 22a. In other words, this filter 24 functions as a guide member 8 that guides the chemical solution to the side wall 22a of the reaction vessel 2.

In addition to the second port 21b, the reaction vessel 2 is also provided with an exhaust port 91 (the "exhaust unit port 91" in prior Application 2021-049636) serving as the exhaust unit 9. This exhaust unit 9 (the "discharge unit 9" in prior application 2021-049636; the discharge unit of the present invention) is used to discharge the gas (including gas and bubbles) in the reaction vessel 2, that is, the fluid in the reaction vessel 2, that is, the gas and the chemical solution. This exhaust port 91 is connected to a pipe 49 connected to the discharge tank 11, and the fluid discharged from the exhaust port 91 is discharged to the discharge tank 11 through the pipe 49. This pipe 49 is provided with a valve 59 so that the flow of fluid discharged from the exhaust port 91 can be controlled. That is, when the reaction vessel main body 22 is pressurized while the valve 59 is open, the fluid in the reaction vessel main body 22 is discharged through the pipe 49, and when the valve 59 is closed, the flow of fluid discharged from the exhaust port 91 can be halted.

The exhaust port 91 is provided in the lid 23, just as with the second port 21b, and is disposed at a height equal to or higher than the height of the chemical solution feed and discharge unit 72. In this embodiment, the chemical solution feed and discharge unit 72 is formed by the second port 21b and the pipe 45, and the pipe 45 extends until it makes contact with the filter 24. That is, the exhaust port 91 is disposed at a position higher than the lower end portion of the chemical solution feed and discharge unit 72, that is, the position P where the pipe 45 makes contact with the filter 24. Consequently, the chemical solution can be supplied smoothly from the second port 21b. That is, the pressure in the reaction vessel main body 22 rises when the chemical solution is supplied from the second port 21b, but if the exhaust port 91 is opened, the exhaust port 91 will be positioned higher than the pipe 45, which prevents the chemical solution supplied from the second port 21b from being directly discharged from the exhaust port 91. Therefore, the gas in the reaction vessel main body 22 is efficiently discharged from the exhaust port 91, and the chemical solution can be smoothly supplied from the second port 21b.

Furthermore, since the pipe 45 of the chemical solution feed and discharge unit 72 is in contact with the filter 24, the chemical solution pressure-fed from the second chemical solution feed unit 73 and through the pipe 45 passes through the filter 24 and is directly introduced into the reaction vessel main body 22. That is, if the pipe 45 is away from the filter 24, there is a risk that the chemical solution pressure-fed from the pipe 45 will flow over the surface of the filter 24 and flow directly into the exhaust port 91, but because the pipe 45 is in contact with the filter 24, the supplied chemical solution flows through the filter 24 and goes into the reaction vessel main body 22, so that the chemical solution can be prevented from being discharged directly from the exhaust port 91 before entering the reaction vessel main body 22.

Also, a nucleic acid synthesis device has a control device (not shown), which controls the valves and the pressure control means 6 so as to control the flow of the chemical solution. That is, the control device also controls the supply and discharge modes of the chemical solution into and out of the reaction vessel 2, and switches between a normal supply mode and a carrier return mode (discussed below).

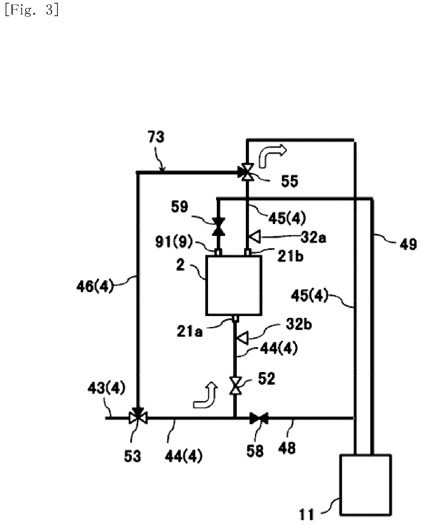

The normal supply mode (forward supply state) is a mode in which the chemical solution is supplied from the first chemical solution feed unit 71. More specifically, as shown in Fig. 3, the three-way valve 53 is open in the direction of flow from the pipe 43 to the pipe 44, the valve 52 is open, and the three-way valve 55 is open in the direction of the flow of the pipe 45, the result being that the chemical solution metered by the metering unit 3 is supplied to the reaction vessel 2 through the first chemical solution feed unit 71. In the drawings, a white valve indicates that the valve is open, and black indicates that the valve is closed. Because the metering vessel 31 is pressurized with the gas tank 62, a differential pressure is generated with respect to the reaction vessel 2, and the chemical solution is fed from the metering vessel 31. The chemical solution supplied to the reaction vessel 2 is brought into contact with the carriers S in the reaction vessel 2 to carry out a synthesis reaction.

This normal supply mode (forward supply state) is the chemical solution supply state that is ordinarily used, and allows the synthesis reaction to be performed more efficiently. That is, the chemical solution is introduced from the lower side of the reaction vessel 2 by being fed from the first chemical solution feed unit 71, so the chemical solution can be distributed throughout the reaction vessel 2. That is, the chemical solution introduced into the reaction vessel 2 from the pipe 44 below is affected by gravity, and therefore spreads out in the radial direction while accumulating in the reaction vessel 2, and undergoes chemical synthesis with all of the carriers S held in the reaction vessel 2. If the chemical solution were introduced from above, the influence of gravity would cause the chemical solution supplied from the second port 21b to proceed directly to the first port 21a, making it more difficult for the solution to spread out in the radial direction. Therefore, the chemical solution introduced from above undergoes chemical synthesis with the carriers S present in the axial direction immediately below the second port 21b, but tends not to react with the carriers S that are farther away in the radial direction, and unreacted carriers S may end up remaining in some locations. Therefore, in the normal supply mode, the carriers S and the chemical solution in the reaction vessel 2 can be reacted without waste, and used as a normal chemical solution supply path.

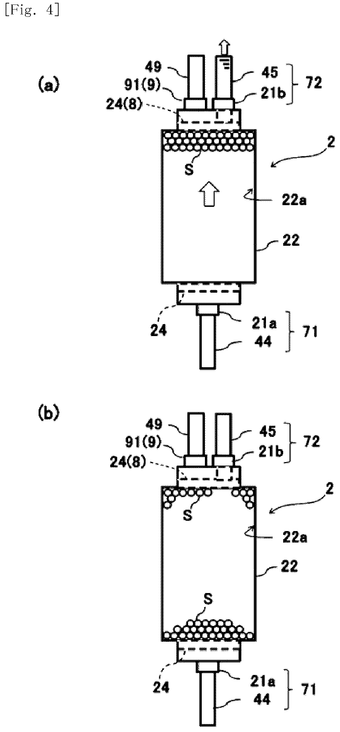

Once the reaction between the carriers S and the chemical solution supplied to the reaction vessel 2 is complete, the chemical solution is discharged. That is, by pressurizing with the gas tank 62, the chemical liquid is discharged from the second port 21b and discharged through the pipe 45 to the drain tank 11 (see Fig. 4(a)).

Also, the carrier return mode (reverse supply state) is a mode in which any carriers adhering to the side wall of the reaction vessel 2 are knocked off and returned to their original position (at the lower end of the reaction vessel 2). This carrier return mode (reverse supply state) is a chemical solution supply mode that is in the opposite direction from that of the normal supply mode (forward supply state), and the feed is from the upper end side of the reaction vessel 2. That is, in this mode, the chemical solution is introduced from the upper side of the reaction vessel 2 and supplied to the reaction vessel 2 by feeding the chemical solution from the chemical solution feed and discharge unit 72. In this embodiment, the feed is from the second chemical solution feed unit 73 and through the chemical solution feed and discharge unit 72. Normally, with a chemical synthesis device of a type in which the various treatment units are connected by pipes and chemical reactions are performed without exposing the chemical solution to the atmosphere, the synthesis reaction with the carriers S can be carried out efficiently in the above-mentioned normal supply mode alone, so there is no need to provide a separate path for supplying the chemical solution from the upper side of the reaction vessel 2. However, when the carriers S are held in the reaction vessel 2, if the chemical solution is discharged from the second port 21b on the upper side as in the normal supply mode, the carriers S may still adhere to the side wall 22a (especially the upper part) of the reaction vessel main body 22 and the filter 24 on the upper side (see Fig. 4(b)). Thus, when carriers S are adhering and the amount of the next chemical solution to undergo a synthesis reaction is small, a problem is that it is more difficult for the chemical solution to reach the adhering carriers S even though the chemical solution is supplied to the reaction vessel 2, and it is difficult to carry out the synthesis reaction efficiently. To solve this problem, the carrier return mode is executed so that the chemical solution introduced from above will flush away any adhering carriers S, thereby improving the synthesis efficiency of the chemical solution and the carriers S.

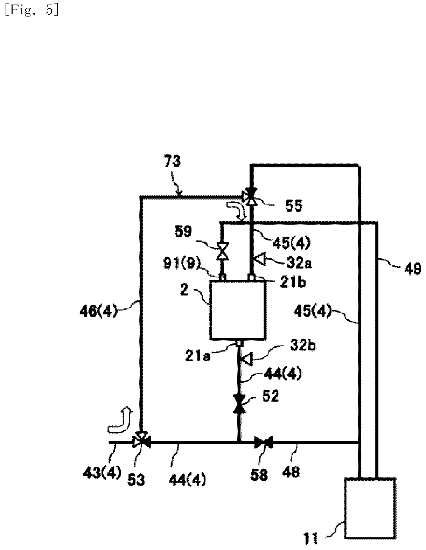

In the carrier return mode (reverse supply state), the chemical solution is supplied from the second chemical solution feed unit 73 (or the chemical solution feed and discharge unit 72). More specifically, as shown in Fig. 5, the three-way valve 53 is opened in the direction of flow from the pipe 43 to the pipe 46, and the three-way valve 55 is opened in the direction of flow from the pipe 46 to the reaction vessel 2 side, so that the chemical solution metered by the metering unit 3 is supplied from the second chemical solution feed unit 73, through the chemical solution feed and discharge unit 72, to the reaction vessel 2. That is, just as in the normal supply mode (forward supply state), the metering vessel 31 is pressurized by the gas tank 62 to create a differential pressure in the reaction vessel 2, and the chemical solution is fed from the metering vessel 31.

When the chemical solution is supplied to the reaction vessel 2, the chemical solution supplied through the second port 21b is guided to the side wall 22a of the reaction vessel main body 22 by the filter 24 (guide member 8). That is, the chemical solution that has permeated the filter 24 permeates into the filter 24 as indicated by the arrows in Fig. 2, and the chemical solution moves over the entire surface of the filter 24. Since the outer edge of the filter 24 is contiguous with the side wall 22a of the reaction vessel main body 22, any chemical solution that cannot be held within the filter 24 is pulled by the surface tension with the side wall 22a and flows along the side wall 22a. Consequently, the chemical solution flowing along the side wall 22a lifts the carriers S adhering to the side wall 22a (see Fig. 4(b)) from the side wall 22a, causing the carriers S to drop toward the lower end of the reaction vessel 2 along with the flow of the chemical solution. As a result, the carriers S adhering to the side wall 22a of the reaction vessel 2 can be returned to their original position (the lower end portion of the reaction vessel), and the synthesis efficiency of the carriers S and the chemical solution can be improved. That is, compared to a state in which the carriers S are still adhering to the side wall 22a, the chemical solution can be brought into contact with all the carriers and the synthesis reaction can be carried out more efficiently.

Also, as discussed above, this carrier return mode not only flushes away any carriers S already adhering to the side wall 22a of the reaction vessel 2, but also makes it less likely that the carriers S floating in the chemical solution will adhere to the side wall 22a. That is, since the chemical solution supplied from the second chemical solution feed unit 73 flows along the side wall 22a of the reaction vessel 2, this flow of the chemical solution directly hits the carriers S floating on the liquid surface, and submerges those carriers. That is, the carriers S will be less likely to adhere to the side wall 22a of the reaction vessel 2 even before the chemical solution in the reaction vessel 2 is discharged. Also, even if the carriers S should try to adhere to the side wall 22a due to the shaking of the liquid surface caused by the supply of the chemical solution, the chemical solution flowing along the side wall 22a will flush back the carriers S, thereby suppressing the carriers S from adhering to the side wall 22a.

This carrier return mode is configured such that the chemical solution supplied from the second chemical solution feed unit 73 is made to flow along the side wall 22a of the reaction vessel 2 by the guide member 8 (in this embodiment, the filter 24) that guides the chemical solution to the side wall 22a of the reaction vessel 2, so the chemical solution can be directly supplied from the upper side in the vertical direction of the reaction vessel 2 (in this embodiment, the chemical solution feed and discharge unit 72). As discussed above, a chemical solution introduced from above is less likely to spread out in the radial direction, so it tends not to react with the carriers S located radially outward, but in this embodiment, since the chemical solution is supplied along the side wall 22a of the reaction vessel 2, the chemical solution can also be supplied to the carriers S that are located radially outward. Therefore, this carrier return mode can also be used as an ordinary chemical supply means for the reaction vessel 2. In this carrier return mode, the chemical solution can be supplied to the reaction vessel 2 while making it less likely that the carriers S will adhere to the side wall 22a of the reaction vessel 2.

Here, since the valve 52 is set to its closed state in order to hold the chemical solution in the reaction vessel 2 in the carrier return mode (reverse supply state), the inside of the reaction vessel 2 is pressurized as the chemical solution is supplied, resulting in a state in which chemical solution beyond a certain amount cannot be fed. Accordingly, in the carrier return mode, the gas (mainly gas, but including bubbles) in the reaction vessel 2 is released to the discharge tank 11 by setting the exhaust part 9 to its open state, and the chemical solution can be accumulated regardless of the chemical solution that is fed.

However, if the exhaust part 9 is always set to its open state, there is the risk that the discharge of the fluid (mainly gas) in the reaction vessel 2 could, depending on the type of the filter 24 (fluid resistance of the filter 24), cause the chemical solution to be discharged from the exhaust part 9 without passing through the filter 24. Accordingly, in the carrier return mode, the chemical solution is supplied by alternately switching between a chemical solution supply state and a vessel discharge state. Here, the chemical solution supply state is a state in which the chemical solution is supplied while the exhaust unit 9 is closed and the second chemical solution feed unit 73 and the chemical solution feed and discharge unit 72 are in the feed state. Also, the vessel discharge state is a state in which the second chemical solution feed unit 73 and the chemical solution feed and discharge unit 72 are in a feed stopped state and the exhaust unit 9 is open.

That is, in the chemical solution supply state, if the chemical solution is supplied from the second port 21b with the exhaust unit 9 closed by closing the valve 59, the pressure in the reaction vessel 2 will rise, but since the exhaust unit 9 is closed, the chemical solution is introduced into the reaction vessel main body against the fluid resistance of the filter 24. If this state is continued, the pressure in the reaction vessel 2 will rise, and the chemical solution supplied from the chemical solution feed and discharge unit 72 will not go in. Once the pressure in the reaction vessel 2 goes over a certain level, the valve 59 is opened, and the three-way valve 55 is closed to stop the supply of the chemical solution and switch to the vessel discharge state, so that the fluid in the reaction vessel 2 is discharged and the increased pressure can be restored to its previous level. Then, the chemical solution is again supplied in the chemical solution supply state. Thus switching between the chemical solution supply state and the vessel discharge state allows the chemical to be supplied while avoiding the problem that the supplied chemical is discharged from the exhaust unit 9 without passing through the filter 24. The timing of the switching between the chemical solution supply state and the vessel discharge state can be set to a specific point at which the chemical solution can be smoothly introduced, depending on pressure control in the reaction vessel 2, time control, or the like.

Also, the control device is set to perform a residual feed operation so that the metered chemical solution will be supplied to the reaction vessel 2 without any being left behind. In this embodiment, the residual feed operation can be performed by a gas-liquid sensor 32a, and after the gas-liquid sensor 32a is switched off, the residual liquid is fed by performing an extra feed operation. More specifically, the pipe 45 is provided with the gas-liquid sensor 32a so that it can be detected whether or not there is any chemical solution in the pipe 45. The gas-liquid sensor 32a is switched on by the passage of the chemical solution and then switched back off, and is used to detect the completion of passage of the chemical solution. Any residue in the pipe 45 can be fed out by ascertaining how much residue in the pipe 45 will be fed to the reaction vessel 2 if a feed operation is performed, based on the attachment position of the gas-liquid sensor 32a. For example, if the chemical solution remaining in the second port 21b from the attachment position of the gas-liquid sensor 32a stops flowing into the reaction vessel 2 after switching back and forth between the chemical solution supply state and the vessel discharge state three times each, then the residue in the pipe 45 can be reliably fed out by switching back and forth between the chemical solution supply state and the vessel discharge state three times each as a residual feed operation from the point when the gas-liquid sensor 32a is switch from on to off. The sensor attachment position can be freely set in this residual feed operation. That is, normally, to detect the completion of feed, it is preferable to install a sensor near the reaction vessel in order to minimize the amount of residue in the pipe 4, but if the above residual feed operation is performed, then any chemical solution remaining in the pipe 4 after the sensor reaction can be fed out, without remaining in the pipe 4, without affecting the sensor attachment position, so the sensor can be attached in the desired position.

Also, the residual feed operation is performed in the same manner in the normal supply mode (forward supply state). That is, in the normal supply mode, the gas-liquid sensor 32b is provided to the pipe 44, and after the gas-liquid sensor 32b switches from on to off, the metering vessel 31 is pressurized by the gas tank 62 for a specific length of time, so that the chemical solution remaining in the first port 21a is fed from the gas-liquid sensor 32b to the reaction vessel 2, without remaining behind. In the above embodiment, an example was given in which the residual feed operation in the carrier return mode was controlled by the number of repetitions between the chemical solution supply state and the vessel discharge state, but may instead be controlled by the duration of the chemical solution supply state.

The above description involved a chemical solution, but a cleaning solution can be used instead of a chemical solution, and even in this case, the flow of the cleaning solution is controlled by the control device described above.

With the chemical solution synthesis device described above, since the second chemical solution feed unit 73 is provided, the carriers S are less likely to adhere to the inner wall of the reaction vessel 2. That is, even if the carriers S try to adhere to the inner wall of the reaction vessel 2 due to the shaking of the liquid surface of the chemical solution, the supply of chemical solution from the second chemical solution feed unit 73 provided above the liquid surface of the chemical solution will make it less likely that the carriers S will adhere, and even if some do adhere to the inner wall of the reaction vessel 2, they can be flushed back to the chemical solution side. The side wall 22a was mainly described as the inner wall of the reaction vessel 2 in this embodiment, but may instead be the wall on the inside of the reaction vessel 2 formed by the reaction vessel main body 22 and the lids 23.

Also, with the chemical solution synthesis device of the above embodiment, because the second chemical solution feed unit 73 is provided separately from the first chemical solution feed unit 71, after the chemical solution is discharged from the chemical solution feed and discharge unit 72 on the upper side in the vertical direction, any carriers adhering to the inner wall of the reaction vessel 2 can be knocked off. That is, when the chemical solution supplied from the second chemical solution feed unit 73 makes contact with the adhering carriers, the carriers sink together with the supplied chemical solution, and the carriers can be returned to the lower end portion of the reaction vessel 2. Therefore, it is easier for the carriers to make contact with the chemical solution supplied from the first chemical solution feed unit 71 on the lower end side, and this improves the reaction efficiency between the carriers and the chemical solution.

Also, with the chemical solution synthesis device in the above embodiment, the reaction vessel 2 is provided with the exhaust unit 9 (the discharge unit of the present invention; also referred to as "discharge unit"), and this allows the fluid in the reaction vessel 2, including air and the chemical solution, to be discharged through the exhaust unit 9. That is, when the chemical solution is supplied from the chemical solution feed and discharge unit 72 to accumulate the chemical solution in the reaction vessel 2, the fluid in the reaction vessel 2 can be discharged through the exhaust unit 9 by opening the exhaust unit 9 even though the chemical solution feed and discharge unit 72 is disposed at the upper part. Consequently, the chemical solution can be smoothly supplied and can be accumulated in the reaction vessel 2 even when the chemical solution feed and discharge unit 72 is disposed at the upper part. Also, since the chemical solution can be smoothly supplied from the upper chemical solution feed and discharge unit 72, any carriers S adhering within the reaction vessel 2 can be brought down by the flow of the chemical solution, and the chemical solution and the carriers S can be sufficiently reacted. Therefore, providing the exhaust unit 9 separately from the chemical solution feed and discharge unit 72 makes it easier for the chemical solution to be supplied to the reaction vessel 2 without exposing the chemical solution to the atmosphere, and the reaction efficiency of the chemical solution can be improved.

Also, in the above embodiment, an example was given in which the second chemical solution feed unit 73 was connected to the chemical solution feed and discharge unit 72, and the chemical solution fed from the second chemical solution feed unit 73 was supplied to the reaction vessel 2 through the chemical solution feed and discharge unit 72, but the chemical solution may be supplied directly from the second chemical solution feed unit 73 to the reaction vessel 2. More specifically, the configuration may be as in Fig. 2, in which a third port (not shown) is provided in addition to the second port 21b and the discharge port 91 to the lid on the upper end side of the reaction vessel 2, a pipe 46 is connected to this third port, so that the metered chemical solution and cleaning solution are supplied to the reaction vessel 2 through the pipe 46 and the third port.

Also, in the above embodiment, an example was given in which the chemical solution was supplied to the reaction vessel 2 by alternately switching between the chemical solution supply state and the vessel discharge state in the carrier return mode (reverse supply state), but the chemical solution may be supplied in the chemical solution supply state alone. That is, if the carriers S adhering to the reaction vessel main body 22 can be knocked off in a single chemical solution supply state, then the chemical solution may be supplied in just one chemical solution supply state to perform the synthesis reaction.

Also, in the above embodiment, an example was given in which the gas-liquid sensors 32a and 32b were used as the sensors for detecting whether or not the liquid transfer was complete, but other sensors may be used instead, as long as they can detect the chemical solution in the pipe 4. For example, a capacitive proximity sensor, a transmissive photomicrosensor, or the like can be used.

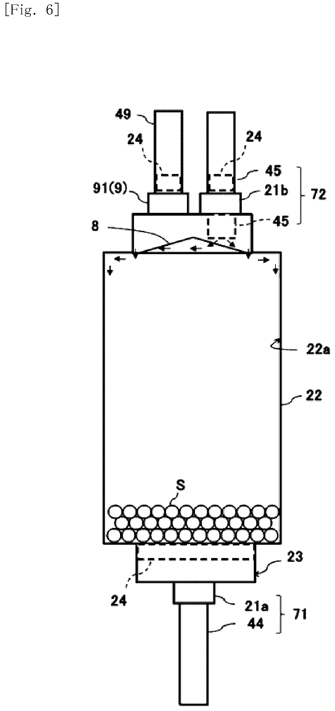

Also, in the above embodiment, an example was given in which the guide member 8 was the filter 24, but any member may be used so long as it will guide the fed chemical solution to the side wall 22a of the reaction vessel 2. For example, as shown in Fig. 6, a conical member may be provided near the inlet/outlet of the reaction vessel 2, and the outer edge thereof may be provided so as to guide to the wall surface contiguous with the side wall 22a of the reaction vessel main body 22. Again with a member such as this, the chemical solution supplied from the second port 21b will travel along the side wall 22a of the reaction vessel main body 22 and be supplied into the reaction vessel main body 22, so the carriers S adhering to the side wall 22a can be knocked down.

Also, in the above embodiment, an example was given in which the filter 24 was provided to the reaction vessel 2, but it may instead be provided to the chemical solution feed and discharge unit 72. For example, as shown in Fig. 6, it may be provided inside the pipe 4 connected to the first port 21a and the exhaust port 91.

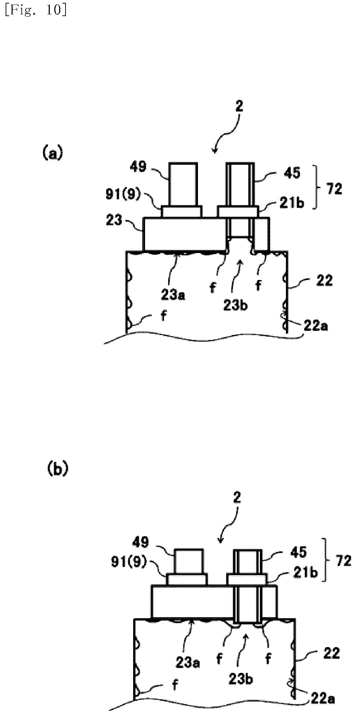

In the above embodiment, an example was given in which the guide member 8 (filter 24) guided the chemical solution supplied from the second chemical solution feed unit 73 (in the above embodiment, the pipe 45 inserted into the second port 21b), to the side wall 22a of the reaction vessel 2, but the configuration may be such that there is no guide member 8, a wall surface that is contiguous with the side wall 22a of the reaction vessel 2 is formed on the lid 23, and the supplied chemical solution is sent to this wall surface. More specifically, as shown in Fig. 10(a), an insertion hole 23b that goes through to the bottom surface 23a is formed in the lid 23, and the pipe 45 is inserted into this insertion hole 23b. The distal end of the pipe 45 is provided in contact with the inner wall of the insertion hole 23b. Consequently, the chemical solution f supplied from the pipe 45 can be sent to the side wall 22a of the reaction vessel 2. That is, with the chemical solution f supplied from the pipe 45, since the distal end of the pipe 45 is in contact with the inner wall of the insertion hole 23b, the chemical solution f that flows out of the opening of the pipe 45 will flow along the inner wall of the insertion hole 23b due to surface tension. Since the inner wall of the insertion hole 23b is formed contiguously with the side wall 22a of the reaction vessel 2 via the bottom surface 23a of the lid 23, the chemical solution f flowing along the inner wall of the insertion hole 23b flow from the bottom surface 23a along the side wall 22a. Thus, with a configuration that is continuous from the opening of the pipe 45 to the side wall 22a of the reaction vessel 2, the supplied chemical solution f can be made to flow along the side wall 22a of the reaction vessel 2.

Fig. 10(a) illustrates an example in which the opening of the pipe 45 is accommodated in the insertion hole 23b, but as shown in Fig. 10(b), the opening of the pipe 45 may be provided protruding from the bottom surface 23a of the lid. Here again, the chemical solution f coming out of the opening of the pipe 45 can be sent to the side wall 22a of the reaction vessel 2 through the bottom surface 23a by surface tension. That is, a configuration formed continuously on the side wall 22a of the reaction vessel 2 encompasses any configuration in which the chemical solution f coming out of the opening of the pipe 45 ends up flowing along the side wall 22a due to surface tension. This makes it less likely that the carriers S will adhere to the inner wall of the reaction vessel 2 (the inner wall of the reaction vessel 2, including the side wall 22a of the reaction vessel main body 22 and the bottom surface 23a of the lid 23), and even if some carriers S should adhere, those carriers S can be knocked off and flushed back to the chemical liquid side.

### [DESCRIPTION OF THE REFERENCE NUMERALS]

1 chemical solution holding unit
2 reaction vessel
3 metering section
4 pipe
8 guide member
9 exhaust unit (discharge unit)
11 discharge tank (vessel)
21a first port
21b second port
24 filter
31 metering vessel
32 gas-liquid sensor
71 first chemical solution feed unit
72 chemical solution feed and discharge unit
73 second chemical solution feed unit
91 exhaust port (discharge unit port)
S carriers (beads)

## Claims

1. A chemical solution synthesis device, comprising:
a chemical solution holding unit holding a chemical solution; and
a reaction vessel in which the chemical solution and carriers are reacted,
in which the chemical solution is transferred from the chemical solution holding unit to the reaction vessel without coming into contact with the atmosphere,
wherein the chemical solution synthesis device has a first chemical solution feed unit that is connected to the reaction vessel and supplies a chemical solution to the reaction vessel, and a chemical solution feed and discharge unit that is provided vertically above the first chemical solution feed unit, and
there is provided a second chemical solution feed unit that suppresses adhesion of the carriers to the reaction vessel.

2. A chemical solution synthesis device, comprising:
a chemical solution holding unit holding a chemical solution; and
a reaction vessel in which the chemical solution and carriers are reacted,
in which the chemical solution is transferred from the chemical solution holding unit to the reaction vessel without coming into contact with the atmosphere,
wherein the chemical solution synthesis device has a first chemical solution feed unit that is connected to the reaction vessel and supplies a chemical solution to the reaction vessel, and a chemical solution feed and discharge unit that is provided vertically above the first chemical solution feed unit, and
there is provided a second chemical solution feed unit that knocks off any carriers adhering to the inner wall of the reaction vessel after the chemical solution has been discharged from the chemical solution feed and discharge unit.

3. The chemical solution synthesis device according to claim 1 or 2, wherein the second chemical solution feed unit is connected to the chemical solution feed and discharge unit, and the chemical solution is supplied by reversing the flow in the chemical solution feed and discharge unit.

4. The chemical solution supply device according to any one of claims 1 to 3, wherein the chemical solution supplied from the second chemical solution feed unit is supplied along the side wall of the reaction vessel.

5. The chemical solution synthesis device according to any one of claims 1 to 4, wherein the chemical in the reaction vessel is discharged by reversing the flow in the first chemical solution feed unit.

6. The chemical solution synthesis device according to any one of claims 1 to 5, wherein the reaction vessel is provided with an exhaust unit for discharging gas in the reaction vessel.

7. The chemical solution synthesis device according to any one of claims 1 to 6, wherein the reaction vessel is provided with a guide member that guides the chemical solution supplied through the second chemical solution feed unit to the side wall of the reaction vessel.

8. The chemical solution synthesis device according to claim 7, wherein the guide member is also used as a filter.

9. The chemical solution synthesis device according to any one of claims 1 to 8, wherein a cleaning solution is used instead of the chemical solution.

10. A chemical solution synthesis device, comprising:
a chemical solution holding unit holding a chemical solution; and
a reaction vessel in which the chemical solution and carriers are reacted,
in which the chemical solution is transferred from the chemical solution holding unit to the reaction vessel without coming into contact with the atmosphere,
wherein the chemical solution synthesis device has a chemical solution feed and discharge unit that is connected to the reaction vessel and supplies a chemical solution, and a first chemical solution feed unit, and
the chemical solution synthesis device further comprises a discharge unit that discharges fluid in the reaction vessel.

11. The chemical solution synthesis device according to claim 10, wherein the first chemical solution feed unit is disposed vertically below the chemical solution feed and discharge unit, and the discharge unit is disposed at a height equal to or greater than the height of the chemical solution feed and discharge unit.

12. The chemical solution synthesis device according to claim 10 or 11, wherein it is possible to switch between a forward supply state in which the chemical solution is supplied from the first chemical solution feed unit to the reaction vessel, and a reverse supply state in which the chemical solution is supplied from the chemical solution feed and discharge unit to the reaction vessel, and the reverse supply state includes an open state of the discharge unit in which fluid in the reaction vessel is discharged.

13. The chemical solution synthesis device according to claim 12, wherein the chemical solution feed and discharge unit and the first chemical solution feed unit can be switched between a feed state in which the chemical solution is fed, and a feed stopped state in which the chemical solution feed is stopped, and in the reverse supply state, the chemical solution is supplied to the reaction vessel by alternately switching between a chemical solution supply state in which the chemical solution is supplied while the discharge unit is closed and the chemical solution feed and discharge unit is in a feed state, and a vessel discharge state in which fluid in the reaction vessel is discharged while the discharge unit is open and the chemical solution feed and discharge unit is in a feed stopped state.

14. The chemical solution synthesis device according to any one of claims 10 to 13, having a sensor for sensing whether or not the feed from the chemical solution feed and discharge unit is complete, wherein a residual feed operation in which residual chemical solution that has not yet been fed is performed after the sensing operation by the sensor.

15. The chemical solution synthesis device according to claim 14, wherein the residual feed operation is performed by alternately repeating the chemical solution supply state and the vessel discharge state.

16. The chemical solution synthesis device according to any one of claims 10 to 15, wherein a holding vessel capable of holding a fluid is provided downstream of the reaction vessel,
wherein the discharge unit is connected to the holding vessel, and the fluid discharged from the discharge unit is discharged to the holding vessel without coming into contact with the atmosphere.

17. The chemical solution synthesis device according to any one of claims 10 to 16, wherein the reaction vessel is equipped with a filter that suppresses the discharge of the carriers.

18. The chemical solution synthesis device according to any one of claims 10 to 17, wherein the reaction vessel is provided with a guide member that guides the chemical solution fed from the chemical solution feed and discharge unit to the side wall of the reaction vessel.

19. The chemical solution synthesis device according to claim 17 or 18, wherein the guide member is also used as the filter.

20. The chemical solution synthesis device according to any one of claims 17 to 19, wherein the first chemical solution supply unit is formed to be in contact with the filter.

21. The chemical solution synthesis device according to any one of claims 10 to 20, wherein the discharge unit is equipped with a filter that suppresses the discharge of the carriers.
